# EUROPÄISCHE PATENTSCHRIFT

(11) **EP 2 130 512 B1**
(45) Veröffentlichungstag und Bekanntmachung des Hinweises auf die Patenterteilung: **08.01.2014**
(21) Anmeldenummer: 09006562.4
(22) Anmeldetag: 15.05.2009
(51) Int. Cl.: A61C 7/10

(54) **Vorrichtung zur kieferorthopädischen Korrekturbehandlung, insbesondere zur Behebung der Fehlstellung von Backenzähnen**
Device for corrective orthodontic treatment, in particular for treating incorrectly placed molars
Dispositif de traitement de correction orthopédique de la mâchoire, notamment pour la suppression de la mauvaise position de molaires

(30) Priorität: 05.06.2008 DE 202008007527 U
(43) Veröffentlichungstag der Anmeldung: 09.12.2009
(73) Patentinhaber: Winsauer, Heinz, Dr. med. dent., 6900 Bregenz (AT); Promedia A. Ahnfeldt GmbH, 57080 Siegen (DE)
(72) Erfinder: Winsauer, Heinz, Dr. med. dent., 6900 Bregenz (AT); Ahnfeldt, Hartwig, 57080 Siegen (DE)
(74) Vertreter: advotec.

(56) Entgegenhaltungen:
- WO-A2-2008/041120
- DE-U1- 20 015 992
- US-A- 3 460 253
- US-A1- 2003 091 952

## Beschreibung

Die Erfindung bezieht sich auf eine Vorrichtung zur kieferorthopädischen Korrekturbehandlung, insbesondere zur Behebung der Fehlstellung von Backenzähnen, wobei die Vorrichtung einerseits an einer Stützvorrichtung befestigt ist und andererseits an dem jeweiligen Backenzahn federbelastet angreift.

Eine Fehlstellung von Backenzähnen ist bereits daran erkennbar, wenn im Bereich der Schneidezähne bzw. deren benachbarter Zähne ein Engstand vorhanden ist. Um dies zu korrigieren, ist es notwendig, die Fehlstellung des jeweiligen Backenzahns zu beheben, d.h. der Backenzahn muss gerichtet bzw. nach hinten geschoben werden, wodurch sich dann der bzw. die vorderen schiefstehenden Zähne wieder einordnen lassen.

Dazu ist aus der US 2003/0091952 oder US 5,785,520 eine orthodontische Distalisierungsvorrichtung mit einem Stützrahmenwerk bekannt, die ferner eine Einrichtung zum Verankern des Rahmenwerks an zumindest einem Verankerungszahn und Schubelemente aufweist, die federbelastet sind. Die Schubelemente sind zwischen dem Rahmenwerk und einer Vorrichtung zum Befestigen an einem weiteren Zahn von mindestens der einen Seite des Bogens eingesetzt. Die Schubelemente üben eine distalisierende Kraft in Richtung der Längsachse des Bogens im Bereich des Zahnes aus, der gerade distalisiert wird. Die Schubelemente sind auf der Lingualseite des Zahnbogens, vorzugsweise in einer Position mehr in Richtung des basalen Zahnfleisches, und der darunter liegenden Knochenstütze des Bogens angeordnet.

Diese Vorrichtung hat jedoch zum einen den Nachteil, dass durch die Anbringung des Stützrahmenwerks an dem bzw. den Verankerungszahn bzw. -zähnen und der mit dem Stützrahmenwerk verbundenen Schubelemente die bestehende Zahnsituation gefährdet wird. Außerdem erscheint eine Nachstellung der federbelasteten Schubelemente sehr umständlich, wobei auch der Weg der Schubelemente sehr begrenzt ist.

Der Erfindung liegt daher die Aufgabe zugrunde, eine Vorrichtung der angegebenen Gattung zu schaffen, die in ihrer Konstruktion relativ einfach ausgebildet ist, mit der sehr einfach eine Nachstellung des federnden Weges möglich ist, die eine relativ große Distanz ermöglicht und mit der die Zahnsituation nicht betroffener Zähne nicht gefährdet wird.

Diese Aufgabe wird erfindungsgemäß durch eine Vorrichtung mit den Kennzeichnungsmerkmalen der Patentansprüche 1 und 2 gelöst.

Zweckmäßige Weiterbildungen der Erfindung sind in den jeweiligen Unteransprüchen gekennzeichnet.

Die erfindungsgemäße Vorrichtung zeichnet sich vor allem dadurch aus, dass die Stellung nicht betroffener Zähne durch die Verwendung von in den Kiefer einschraubbaren Ankerschrauben nicht gefährdet wird, da keinerlei Druck auf andere Zähne ausgeübt wird. Eine Nachstellung des federnden Weges ist mit relativ einfachen Mitteln möglich, wobei auch die einstellbare Distanz gegenüber herkömmlichen Vorrichtungen wesentlich größer ist.

Weitere Vorteile der Erfindung ergeben sich aus der nachfolgenden Beschreibung anhand von die Erfindung wiedergebenden und in der Zeichnung dargestellten Ausführungsbeispielen. Dabei zeigt
- Fig. 1: eine Draufsicht auf einen Oberkiefer mit einem ersten Ausführungsbeispiel einer Vorrichtung,
- Fig. 2: einen vergrößerten Ausschnitt II aus Fig. 1, in der die Vorrichtung mit vorgespanntem Schubelement und eingefahrenem Distanzstab dargestellt ist,
- Fig. 3: eine vergrößerte Draufsicht der Vorrichtung nach Fig. 1 mit ausgefahrenem Schubelement und ausgezogenem Distanzstab,
- Fig. 4: eine vergrößerte Seitenansicht der Stützvorrichtung mit Ankerschraube und aufgeclipstem Schubelement bzw. Druckstab,
- Fig. 5: eine Draufsicht auf einen Oberkiefer mit einem zweiten Ausführungsbeispiel einer Vorrichtung,
- Fig. 6: einen vergrößerten Ausschnitt VI aus Fig. 5, in der die Vorrichtung mit vorgespanntem Schubelement und eingefahrenem Distanzstab dargestellt ist,
- Fig. 7: eine vergrößerte Draufsicht der Vorrichtung nach Fig. 5 mit ausgefahrenem Schubelement und ausgezogenem Distanzstab und
- Fig. 8: eine vergrößerte Seitenansicht der Vorrichtung nach Fig. 1, in der die Vorrichtung mit vorgespanntem Schubelement und eingefahrenem Distanzstab dargestellt ist, wobei der Distanzstab an einem Goshgarian-Schloss angreift.

Die in den Figuren dargestellten Vorrichtungen 1 sind zur kieferorthopädischen Korrekturbehandlung, insbesondere zur Behebung der Fehlstellung von Backenzähnen 2 vorgesehen. Dabei ist die Vorrichtung 1 einerseits an einer Stützvorrichtung 3 lösbar befestigt und greift andererseits an dem jeweiligen Backenzahn 2 federbelastet an.

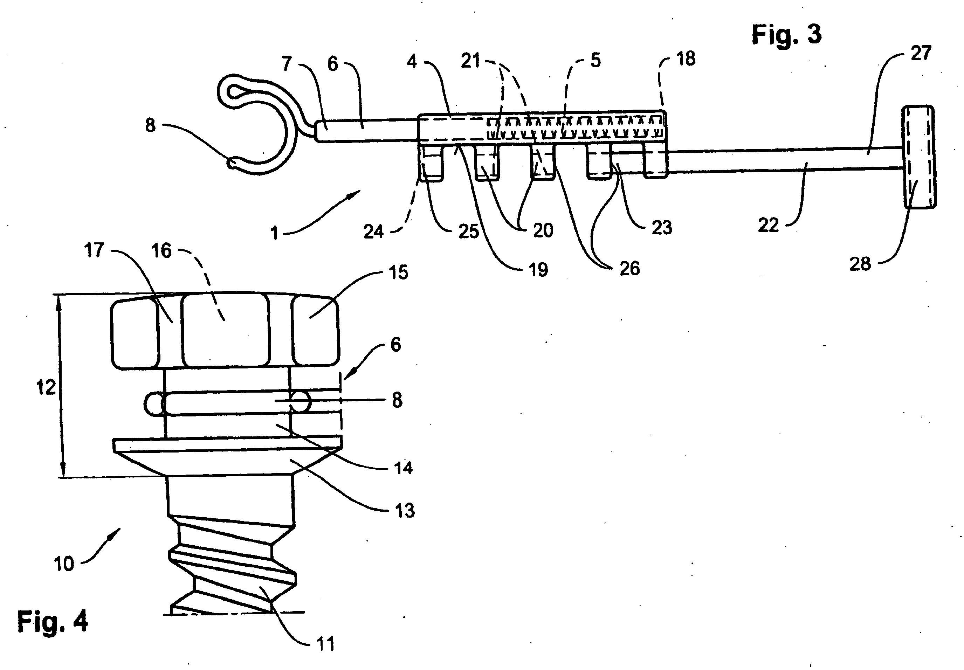

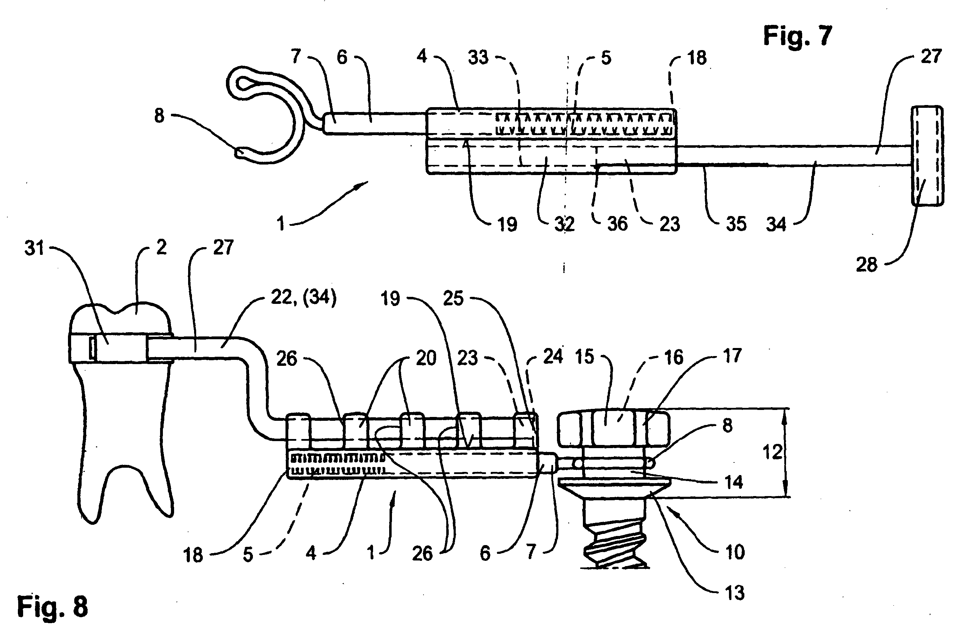

Sämtliche Vorrichtungen 1 bestehen jeweils aus einem in einer Hülse 4 axial geführten und von einer Druckfeder 5 beaufschlagten Schubelement 6, an dessen freien, aus der Hülse 4 herausragenden Ende 7 ein Anschlussstück 8 vorgesehen ist, das an der aus einer vorzugsweise in den jeweiligen Kiefer 9 einschraubbaren Ankerschraube 10 (siehe insbesondere Fig. 4 und 8) gebildeten Stützvorrichtung 3 angreift.

Der an den Gewindeschaft 11 (Fig. 4 und 8) anschließende Kopfteil 12 der Ankerschraube 10 kann beispielsweise durch einen Kragen 13 und einen durch einen gegenüber demselben abgesetzten Schaft 14 von dem Kragen 13 beabstandeten Schraubenkopf 15 gebildet sein.

Im Schraubenkopf 15 ist vorzugsweise ein Kreuzschlitz 16 vorgesehen. Ferner kann der Schraubenkopf 15 an seinem äußeren Umfang 17 zusätzlich einen Mehrkant (hier Sechskant) aufweisen, mit dem die Ankerschraube 10 in den Kiefer 9 eingedreht werden kann. Selbstverständlich kann zum Eindrehen der Ankerschraube 10 in den Kiefer 9 auch der in dem Schraubenkopf 15 vorgesehene Kreuzschlitz 16 verwendet werden.

Die Druckfeder 5, die vorzugsweise aus Nitinol besteht, stützt sich einerseits an einer die Hülse 4 verschließenden Wand 18 und andererseits an dem Schubelement 6 ab. Das Anschlussstück 8 des Schubelementes 6 ist vorzugsweise clipartig ausgebildet, wobei das Anschlussstück 8 an dem Schaft 14 der Ankerschraube 10 form- und kraftschlüssig angreift und gehalten ist.

Zur Gewinnung einer winkelstabilen Verbindung kann ggf. die Verbindung des Schubelementes 6 mit seinem an dem Schaft 14 angreifenden Anschlussstück 8 durch einen aushärtenden Klebstoff oder Kunststoff zusätzlich fixiert werden. Dazu wird vorzugsweise der Raum zwischen Schraubenkopf 15 und Kragen 13 mit dem Kunststoff verfüllt.

Anstelle des Fixierens mit Kunststoff kann ggf. das an dem Schaft 14 angreifende Anschlussstück 8 des Schubelementes 6 auch mit demselben verpresst sein.

Alternativ kann das Anschlussstück 8 auch als gerades oder verkröpftes Drahtende ausgebildet sein (nicht dargestellt), das beispielsweise in eine Bohrung (ebenfalls nicht dargestellt) an dem Schraubenkopf 15 eingesteckt und dort ggf. gesichert wird. Auch eine Ausbildung des Anschlussstückes 8 als geschlossener Ring (nicht dargestellt) ist durchaus möglich, wobei der Ring über den Schraubenkopf 15 gelegt werden muss.

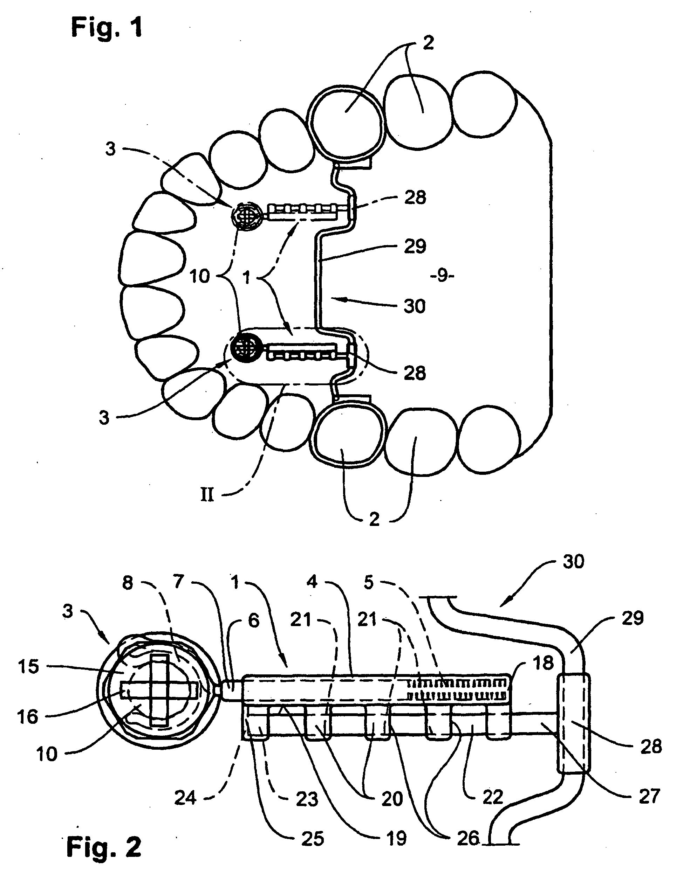

Bei den Ausführungsbeispielen nach den Figuren 1 bis 3 sowie nach der Fig. 8 sind an einer Außenseite 19 der Hülse 4 mehrere über die Länge derselben gleichmäßig hintereinander verteilte Röhrchen 20 vorgesehen, in deren Innenbohrungen 21 ein parallel zur Hülse 4 verlaufender Distanzstab 22 geführt und gelagert ist, dessen zu dem Anschlussstück 8 gerichtetes Ende 23 sich je nach erforderlicher Auszugslänge des Distanzstabes 22 an einem der Röhrchen 20 abstützt.

Die Abstützung des Distanzstabes 22 erfolgt bei zusammengeschobener Vorrichtung 1 an der Abschlusswand 24 auf der zu dem Anschlussstück 8 gerichteten Seite 25 des dem Anschlussstück 8 am nahesten gelegenen Röhrchens 20 bzw. bei auseinandergezogener Vorrichtung 1 an den von dem Anschlussstück 8 abgewandten Seiten 26 der Röhrchen 20 nach dem Eindrücken derselben mittels einer Zange o.dgl.. Vorzugsweise sind die Röhrchen 20 dazu auf ihren der Hülse 4 abgewandten Seiten geschlitzt. An welchem Röhrchen 20 sich der Distanzstab 22 abstützt, hängt dabei selbstverständlich von der erforderlichen Auszugslänge ab.

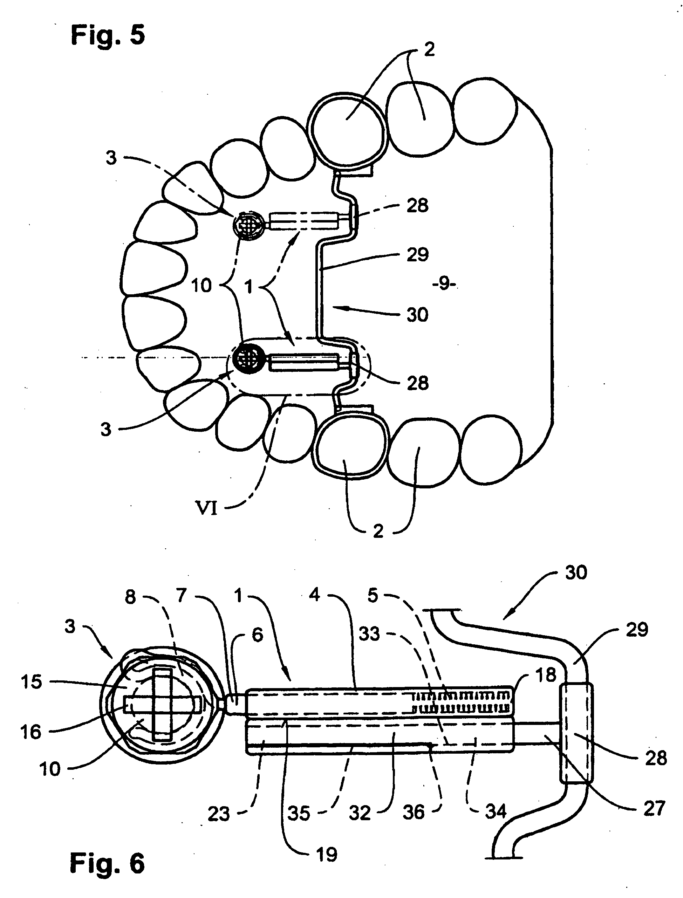

Bei den Ausführungsbeispielen nach den Figuren 1 bis 3 sowie nach den Figuren 5 bis 7 kann an der von dem Anschlussstück 8 abgewandten Seite 27 des Distanzstabes 22 ein quer zu demselben verlaufendes Anschlussröhrchen 28 angeordnet sein, durch das z.B. der Draht 29 eines zwischen zwei gegenüberliegenden Backenzähnen 2 angeordneten Transpalatinalbogens 30 hindurchragt.

Wie in Fig. 8 dargestellt kann selbstverständlich der Distanzstab 22 bei allen Ausführungsbeispielen auch direkt an einem an dem jeweiligen Backenzahn 2 angebrachten Goshgarian-Schloss 31 angreifen. Dabei wird auf das quer zu dem Distanzstab 22 verlaufende Anschlussröhrchen 28 verzichtet.

Bei dem Ausführungsbeispiel nach den Figuren 5 bis 7 ist anstelle der Röhrchen 20 an einer Außenseite 19 der Hülse 4 eine weitere Hülse 32 angeordnet, in deren Innenbohrungen 33 ebenfalls ein parallel zur Hülse 4 verlaufender Distanzstab 34 geführt und gelagert ist, dessen zu dem Anschlussstück 8 gerichtetes Ende 23 sich je nach erforderlicher Auszugslänge des Distanzstabes 34 mit einer sich über einen Teilbereich des Distanzstabes 34 erstreckenden Verzahnung 35 an mindestens einem Rastzahn 36 der weiteren Hülse 32 widerhakenförmig abstützt.

Durch die Abstützung der Vorrichtung 1 an der Stützvorrichtung 3 einerseits und an dem Transpalatinalbogen 30 bzw. an dem Goshgarian-Schloss 31 andererseits wird über das federbeaufschlagte Schubelement 6 ein Druck auf den jeweilig zu richtenden bzw. zu schiebenden Backenzahn 2 erzeugt. Dazu ist die Vorrichtung 1 auf der Seite des Kiefers 9 angeordnet, auf der sich der zu richtende bzw. der zu schiebende Backenzahn 2 befindet. Wenn auf beiden Seiten des Kiefers 9 Backenzähne 2 gerichtet bzw. geschoben werden müssen, ist auf beiden Seiten des Kiefers 9 jeweils eine Vorrichtung 1 vorgesehen (in Fig. 1 und Fig. 5 zweite Vorrichtung 1 strichpunktiert dargestellt).

Mit diesen Ausführungsformen der Vorrichtung 1 wird ein relativ einfaches Richten bzw. Verschieben von Backenzähnen 2 ermöglicht, wobei eine Nachstellung durch das federbeaufschlagte Schubelement 6 zunächst automatisch erfolgt. Erst nach dem Erreichen des Endes des Federweges ist das Eingreifen eines Zahnarztes notwendig, der dann den Distanzstab 22, 34 so weit in Richtung des Transpalatinalbogens 30 bzw. des Goshgarian-Schlosses 31 herauszieht und diesen durch Zusammendrücken des sich hinter dem zu dem Anschlussstück 8 gerichteten Ende 23 des Distanzstabes 22 befindlichen Röhrchen 20 verriegelt bzw. durch die Verzahnung 35 mit dem Rastzahn 36 selbsttätig veriegelt, so dass die Druckfeder 5 wieder vorgespannt ist und erneut Druck auf den jeweiligen Backenzahn 2 ausüben kann.

Die in den Figuren dargestellte Form des Anschlussstückes 8 ist lediglich als Ausführungsbeispiel anzusehen. Selbstverständlich kann das Anschlussstück 8 vielfältige andere Formen aufweisen, die dabei beispielsweise clipartig, ringförmig oder stabförmig an der Stützvorrichtung 3 bzw. der Ankerschraube 10 angreifen und gehalten sind.

### Bezugszeichen

- 1: Vorrichtung allg.
- 2: Backenzähne
- 3: Stützvorrichtung
- 4: Hülse von 1
- 5: Druckfeder in 4
- 6: Schubelement von 1 in 4
- 7: freies, aus 4 herausragendes Ende von 6
- 8: Anschlussstück von 6 bei 7
- 9: Kiefer
- 10: Ankerschraube von 3
- 11: Gewindeschaft von 10
- 12: Kopfteil von 10
- 13: Kragen von 12
- 14: Schaft von 12 zwischen 13 und 15
- 15: Schraubenkopf von 12
- 16: Kreuzschlitz in 15
- 17: äußerer Umfang von 15
- 18: Wand von 4
- 19: Außenseite von 4
- 20: Röhrchen auf 19
- 21: Innenbohrungen von 20
- 22: Distanzstab in 20 bzw. 21 (Fig. 1 bis 3 und 8)
- 23: zu 8 gerichtetes Ende von 22, 34
- 24: Abschlusswand an 20 bei 8
- 25: zu 8 gerichtete Seite von 20 bei 8
- 26: von 8 abgewandte Seite von 20
- 27: von 8 abgewandte Seite von 22, 34
- 28: Anschlussröhrchen an 27
- 29: Draht von 30
- 30: Transpalatinalbogen zwischen 2
- 31: Goshgarian-Schloss an 2
- 32: Hülse auf 19
- 33: Innenbohrung von 32
- 34: Distanzstab (Fig. 5 bis 7)
- 35: Verzahnung an 34
- 36: Rastzahn in 32

## Patentansprüche

1. Vorrichtung zur kieferorthopädischen Korrekturbehandlung, insbesondere zur Behebung der Fehlstellung von Backenzähnen, wobei die Vorrichtung einerseits an einer Stützvorrichtung befestigt ist und andererseits an dem jeweiligen Backenzahn federbelastet angreift, **dadurch gekennzeichnet, dass** die Vorrichtung (1) aus einem in einer Hülse (4) axial geführten und von einer Druckfeder (S) beaufschlagten Schubelement (6) besteht, an dessen freien, aus der Hülse (4) herausragenden Ende (7) ein Anschlussstück (8) vorgesehen ist, das an der aus einer vorzugsweise in den jeweiligen Kiefer (9) einschraubbaren Ankerschraube (10) gebildeten Stützvorrichtung (3) angreift, und dass an einer Außenseite (19) der Hülse (4) eine weitere Hülse (32) angeordnet ist, in deren Innenbohrungen (33) ein parallel zur Hülse (4) verlaufender Distanzstab (34) geführt und gelagert ist, dessen zu dem Anschlussstück (8) gerichtetes Ende (23) sich je nach erforderlicher Auszugslänge des Distanzstabes (34) mit einer sich über einen Teilbereich des Distanzstabes (34) erstreckenden Verzahnung (35) an mindestens einem Rastzahn (36) der weiteren Hülse (32) widerhakenförmig abstützt und dessen von dem Anschlußstück (8) abgewandte Seite (27) sich an einem Transpalatinalbogen (30), oder einem Goshgarian-Schloss (31) abstützt.

2. Vorrichtung zur kieferorthopädischen Korrekturbehandlung, insbesondere zur Behebung der Fehlstellung von Backenzähnen, wobei die Vorrichtung einerseits an einer Stützvorrichtung befestigt ist und andererseits an dem jeweiligen Backenzahn federbelastet angreift, **dadurch gekennzeichnet, dass** die Vorrichtung (1) aus einem in einer Hülse (4) axial geführten und von einer Druckfeder (5) beaufschlagten Schubelement (6) besteht, an dessen freien, aus der Hülse (4) herausragenden Ende (7) ein Anschlussstück (8) vorgesehen ist, das an der aus einer vorzugsweise in den jeweiligen Kiefer (9) einschraubbaren Ankerschraube (10) gebildeten Stützvorrichtung (3) angreift, und dass an einer Außenseite (19) der Hülse (4) mehrere über die Länge derselben gleichmäßig hintereinander verteilte Röhrchen (20) angeordnet sind, in deren Innenbohrungen (21) ein parallel zur Hülse (4) verlaufender Distanzstab (22) geführt und gelagert ist, dessen zu dem Anschlussstück (8) gerichtetes Ende (23) sich je nach erforderlicher Auszugslänge des Distanzstabes (22) an einem der Röhrchen (20) abstützt und dessen von dem Anschlussstück (8) abgewandte Seite (27) sich an einem Transpalatinalbogens (30) einem Goshgarian-Schloss (31) abstützt.

3. Vorrichtung nach Anspruch 1 oder 2, **dadurch gekennzeichnet, dass** an der von dem Anschlussstück (8) abgewandten Seite (27) des Distanzstabes (22, 34) ein quer zu demselben verlaufendes Anachlussröhrchen (28) angeordnet ist, durch das der Draht (29) des zwischen zwei gegenüberliegenden Backenzähnen (2) angeordneten Transpalatinalbogens (30) hindurchragt.

4. Vorrichtung nach einem der Ansprüche 1 bis 3, **dadurch gekennzeichnet, dass** die Druckfeder (5) aus Nitinol besteht.

5. Vorrichtung nach einem der Ansprüche 1 bis 4, **dadurch gekennzeichnet, dass** das Anschlussstück (8) clipartig ausgebildet ist, wobei das Anschlußstück (8) an einem Schaft (14) der Stützvorrichtung (3) form- und kraftschlüssig angreift.

6. Vorrichtung nach einem der Ansprüche 2 bis 5, **dadurch gekennzeichnet, dass** die Abstützung des Distanzstabes (22) an der Abschlusswand (24) auf der zu dem Anschlussstück (8) gerichteten Seite (25) des dem Anschlussstück (8) am nahesten gelegenen Röhrchens (20) bzw. an der von dem Anschlussstück (8) abgewandten Seiten (26) der Röhrchen (20) nach dem Eindrücken derselben erfolgt.

7. Vorrichtung nach einem der Ansprüche 2 bis 6, **dadurch gekennzeichnet, dass** die Röhrchen (20) vorzugsweise auf ihren der Hülse (4) abgewandten Seiten geschlitzt sind.

## Claims

1. A device for orthodontic corrective treatment, in particular for correcting the malposition of molar teeth, wherein the device is attached at one side to a support device and at the other side it engages the respective molar in a spring loaded manner, **characterized in that** the device (1) is composed of a thrust element (6) that is axially guided in a sleeve (4) and acted on by a compression spring (5), at whose free end (7), which protrudes out of the sleeve (4), a connection piece (8) is provided that engages on the support device (3) preferably formed by an anchor screw (10) that can be screwed into the respective jaw bone (9), and that at an outer side (19) of the sleeve (4) another sleeve (32) is arranged, in whose inner bores (33) a spacer rod (34) extending parallel to the sleeve (4) is guided and mounted whose end (23) oriented towards the connection piece (8), as a function of the required extension length of the spacer rod (34), is supported in a barbed manner by means of a toothing extending across a portion of the spacer rod (34) at at least one locking tooth (36) of the other sleeve (32) and whose side (27) facing away from the connection piece (8) is supported at a transpalatal arch (30) or a Goshgarian lock (31).

2. A device for orthodontic corrective treatment, in particular for correcting the malposition of molar teeth, wherein the device is attached at one side to a support device and at the other side it engages the respective molar in a spring-loaded manner, **characterized in that** the device (1) is composed of a thrust element (6) that is axially guided in a sleeve (4) and acted on by a compression spring (5), at whose free end (7), which protrudes out of the sleeve (4), a connection piece (8) is provided that engages on the support device (3) preferably formed by an anchor screw (10) that can be screwed into the respective jaw bone (9), and that at an outer side (19) of the sleeve (4), multiple tubes (20) are arranged that are evenly distributed one behind the other along the length thereof and in whose inner bores (21) a spacer rod (22) extending parallel to the sleeve (4) is guided and mounted whose end (23) oriented towards the connection piece (8), as a function of the required extension length of the spacer rod (22), is supported on one of the tubes (20) and whose side (27) facing away from the connection piece (8) is supported on a transpalatal arch (30) or on a Goshagrian lock (31).

3. The device according to claim 1 or 2, **characterized in that** at the side (27) of the spacer rod (22, 34) facing away from the connection piece (8), a connection tube (28) running crosswise thereto is arranged through which the wire (29) of the transpalatal arch (30) arranged between two opposing molars (2) protrudes.

4. The device according to any of the claims 1 to 3, **characterized in that** the compression spring (5) consists of nitinol.

5. The device according to any of the claims 1 to 4, **characterized in that** the connection piece (8) is formed in the manner of a clip, the connection piece (8) engaging on a shaft (14) of the support device (3) in a form- and force-fitting fashion.

6. The device according to any of the claims 2 to 5, **characterized in that** the support of the spacer rod (22) takes place at the end wall (24) at the side (25) oriented towards the connection piece (8) of the tube (20) positioned closest to the connection piece (8) or at the sides (26) of the tubes (20) facing away from the connection piece (8) after they have been pressed in.

7. The device according to any of the claims 2 to 6, **characterized in that** the tubes (20) are preferably slotted on their sides facing away from the sleeve (4).

## Revendications

1. Dispositif pour le traitement correctif orthodontique, en particulier pour la réparation de la malposition des molaires, le dispositif étant attaché d'un côté à un dispositif de support et d'autre côté il engage la molaire respective de manière chargée par ressort, **caractérisé en ce que** le dispositif (1) est composé d'un élément de poussée (6) axialement guidé dans une douille (4) et étant pressurisé par un ressort de pression (5), une pièce de raccordement (8) étant prévue sur l'extrémité (7) libre saillant de la douille (4), qui (8) engage le dispositif de support (3) formé, de préférence, par un scellement (10) étant vissable dans le maxillaire (9) respectif, et que d' un côté extérieur (19) de la douille (4), une autre douille (32) est arrangée, dans les perçages intérieurs (33) de laquelle une tige d'entretoise (34) s'étendant parallèlement à la douille (4) est guidée et montée, dont l'extrémité (23) orientée vers la pièce de raccordement (8), en fonction de la longueur d'extension requise de la tige d'entretoise (34), est supportée, en tant que barbelure, avec une denture (35) s'étendant transversalement par une partie de la tige d'entretoise (34) sur au moins un dent d'arrêt (36) de l'autre douille (32), et dont le côté (27) détourné de la pièce de raccordement (8) est supporté sur un arc transpalatin (30) ou sur une serrure Goshgarian (31).

2. Dispositif pour le traitement correctif orthodontique, en particulier pour la réparation de la malposition des molaires, le dispositif étant attaché d'un côté à un dispositif de support et d'autre côté il engage la molaire respective de manière chargée par ressort, **caractérisé en ce que** le dispositif (1) est composé d'un élément de poussée (6) axialement guidé dans une douille (4) et étant pressurisé par un ressort de pression (5), une pièce de raccordement (8) étant prévue sur l'extrémité (7) libre saillant de la douille (4), qui (8) engage le dispositif de support (3) formé, de préférence, par un scellement (10) étant vissable dans le maxillaire (9) respectif, et que d'un côté extérieur (19) de la douille (4), plusieurs tubes (20) répartis uniformément l'une derrière l'autre sur la longueur de celui-ci sont arrangés, dans les perçages intérieurs (21) desquels une tige d'entretoise (22) s'étendant parallèlement à la douille (4) est guidée et montée, dont l'extrémité (23) orientée vers la pièce de raccordement (8) est supportée sur une des tubes (20) en fonction de la longueur d'extension requise de la tige d'entretoise (22), et dont le côté (27) détourné de la pièce de raccordement (8) est supporté sur un arc transpalatin (30) ou sur une serrure Goshgarian (31).

3. Dispositif selon les revendications 1 ou 2, **caractérisé en ce que** du côté (27) de la tige d'entretoise (22, 34) détourné de la pièce de raccordement (8), un tube de raccordement (28) est arrangé, s'y étendant transversalement, à travers duquel s'étend le fil (29) de l'arc transpalatin (30) arrangé entre deux molaires (2) opposées.

4. Dispositif selon l'une quelconque des revendications 1 à 3, **caractérisé en ce que** le ressort de pression (5) se compose de nitinol.

5. Dispositif selon l'une quelconque des revendications 1 à 4, **caractérisé en ce que** la pièce de raccordement (8) est formée en tant qu'un clip, la pièce de raccordement (8) engageant un hampe (14) du dispositif de support (3) par liaison de forme et de force.

6. Dispositif selon l'une quelconque des revendications 2 à 5, **caractérisé en ce que** le support de la tige d'entretoise (22) a lieu du côté (25) orienté vers la pièce de raccordement du tube (20) le plus proche de la pièce de raccordement (8) ou des côtés (26) des tubes (20) détournés de la pièce de raccordement (8) après qu'ils ont été emboutis.

7. Dispositif selon l'une quelconque des revendications 2 à 6, **caractérisé en ce que**, de préférence, les tubes (20) sont rainurés de leurs côtés détournés de la douille (4).
